# EUROPÄISCHE PATENTANMELDUNG

(11) **EP 0 637 634 A1**
(43) Veröffentlichungstag der Anmeldung: **08.02.1995**
(21) Anmeldenummer: 94890133.5
(22) Anmeldetag: 03.08.1994
(51) Int. Cl.: C21C 5/52

(54) **Verfahren zum Herstellen einer Metallschmelze**

(30) Priorität: 04.08.1993 AT 1557/93
(71) Anmelder: VOEST-ALPINE INDUSTRIEANLAGENBAU GMBH, A-4020 Linz (AT)
(72) Erfinder: Fritz, Ernst, Dipl.-Ing., A-4020 Linz (AT); Dimitrov, Stefan, Dr. Dipl.-Ing., A-4030 Linz (AT)
(74) Vertreter: Kopecky, Helmut

(57) **Zusammenfassung**

Bei einem Verfahren zum Herstellen einer Metallschmelze (6), insbesondere einer Stahlschmelze (6), in einem Elektro-Lichtbogenofen (1) wird die Badoberfläche (8) während der flachbadperiode(n) mit einer Schaumschlacke (9) bedeckt.

Um die Vorteile eines von Schaumschlacke umhüllten Lichtbogens über eine große Zeitspanne mit möglichst geringem Aufwand sicherzustellen, wird während einer Ofencharge mehrmals eine Pegelmessung der Schichthöhe (10) einer Schlacke durchgeführt und durch Ein- und/oder Aufblasen von Feststoffen, Gasen oder eines Gemisches von Feststoffen und Gasen in und/oder auf die Schlacke oder die Metallschmelze (6) eine einen von mindestens einer Elektrode (3) gebildeten Lichtbogen (4) einhüllende Schaumschlacke (9) gebildet, deren Schichthöhe (10) so bemessen ist, daß sich die Schaumschlacke mindestens über den gesamten Lichtbogen (4) erstreckt, so daß eine Reihe von Vorteilen optimal genutzt wird (Fig. 1).

## Beschreibung

Die Erfindung betrifft ein Verfahren zum Herstellen einer Metallschmelze, insbesondere einer Stahlschmelze, in einem Elektro-Lichtbogenofen, wobei die Badoberfläche während der Flachbadperiode(n) mit einer Schaumschlacke bedeckt wird, sowie eine Anlage zur Durchführung des Verfahrens.

Bei der Stahlerzeugung mit Hilfe elektrischer Energie in einem Elektro-Lichtbogenofen liefert der Lichtbogen bzw. liefern gegebenenfalls mehrere Lichtbögen den überwiegenden Anteil der benötigten Prozeßwärme. Bei den diskontinuierlichen Verfahren wird in der Praxis nach der teilweisen und/oder vollständigen Ausbildung des sogenannten Flachbades, das sich z.B. nach dem weitgehenden Einschmelzen von Schrott oder Eisenschwamm bildet und etwa einem Drittel der Dauer einer Charge entspricht, die an sich bekannte Schaumschlackenfahrweise angestrebt.

Aus der US-A - 4,447,265 ist es bekannt, den Lichtbogen von der schäumigen Schlacke vollständig zu umgeben bzw. zu umhüllen. Die Vorteile dieser Schlackenführung sind folgende:
· Erhöhung des thermischen Wirkungsgrades der zugeführten elektrischen Energie bzw. Reduzierung des Elektroenergieverbrauches;
· Möglichkeit zum Arbeiten mit langen Bögen (hohen Spannungen bei verhältnismäßig geringen Stromstärken), ohne dabei die Ofenwände und den Ofendeckel thermisch hoch zu belasten - als Folge ergibt sich ein geringerer Feuerfestverschleiß; auch die Elektroden werden weniger belastet;
· Erhöhung der Anlagenproduktivität wegen der erzielbaren Schmelzzeitverkürzung unter sonst gleichen Bedingungen;
· Senkung des Elektrodenverbrauches;
· geringere Lärmbelastung der Ofenumgebung;
· Niedrigere N-Gehalte im Stähl;
· verbesserte Bedingungen für das Einblasen von Feststoffen über Hohlelektrode(n).

Besonders vorteilhaft ist die Schaumschlackenfahrweise bei
· Elektrolichtbogenofen-Schmelzen (Gleich- oder Wechselstrom) mit längeren Flachbadperioden, wie z.B. beim Einsatz von direktreduziertem Eisen (Eisenschwamm) und/oder feinkörnigen Eisenträgern (Eisenschwammstaub, Eisenkarbid, Erz, Filterstaub etc.) sowie
· bei Elektrolichtbogenofen-Schmelzen mit Gleichstrom mit einem oder mehreren Lichtbögen wegen der grundsätzlich größeren Lichtbogenlänge im Vergleich zu Wechselstrom-Lichtbögen bzw.
· bei kontinuierlich arbeitenden Verfahren, bei denen im weitgehenden Flachbadbetrieb Energie über Lichtbögen und Kühlmittel über lange Zeiträume zugeführt werden.

Es ist bekannt (vgl. Met. Trans. B 20, 1989, Nr. 4, 509-514 (cn), Kimihisa Ito et al., "Study on the Foaming of CaO-SiO₂-FeO Slags: Part I. Foaming Parameters and Experimental Results"; Met. Trans. B 20, 1989, Nr. 4, 515-521 (cn), Kimihisa Ito et al., "Study on the Foaming of CaO-SiO₂-FeO Slags: Part II. Dimensional Analysis and Foaming in Iron and Steelmaking Processes"), daß die Schaumbildung bei den Stahlerzeugungsschlacken vom Grundsystem CaO-SiO₂-FeOₙ mit gewissen Anteilen an MgO, Al₂O₃, Cr₂O₃, MnO, P₂O₅, S, CaF₂ u.a. durch die folgenden Einflußgrößen bestimmt wird:
· die Stahlbadtemperatur
· die Geschwindigkeit und den Ort der CO/CO₂-Gasbildung
· die physikalisch-chemischen Eigenschaften der Schlacke in Abhängigkeit von ihrer Zusammensetzung (Viskosität, Oberflächenspannung Schlacke/Gas, Grenzflächenspannung Schlacke/Metall, Basizität, Eisenoxidgehalt bzw. -aktivität, Art und Mengenverhältnis der Schlackenphasen u.a.).

Das Schlackenschäumen wird durch eine geringere Badtemperatur und eine zunehmende Schlackenviskosität sowohl im homogenen als auch im heterogenen Bereich begünstigt. Dabei kommt dem Eisenoxidgehalt eine besondere Rolle zu, da FeOₙ einerseits bei zunehmendem Anteil die Schlacke verflüssigt und somit der Schaumschlackenbildung entgegenwirkt, andererseits jedoch einen wichtigen Sauerstofflieferanten für die CO-Bildung darstellt und somit diese wichtige Voraussetzung zum Schlackenschäumen fördert. Als Folge ergeben sich im oben genannten Quasi-Dreistoffsystem Bereiche mit stark unterschiedlichem Schäumverhalten der Schlacke (vgl. Stahl u. Eisen 106 (1986) Nr. 11, 625-630, Dieter Ameling et al. "Untersuchungen zur Schaumschlackenbildung im Elektrolichtbogenofen").

In der üblichen Stahlwerkspraxis erfolgt eine Beeinflussung der Schaumschlackenfahrweise bevorzugt durch Kohleeinsatz im Korb, Zugabe von Stückkohle über den Deckel (oder durch die Schlackentür) und/oder durch Einblasen von Feinkohle über Lanzen (Düsen) unterschiedlicher Ausführung, wobei die Kohleausnutzung im letzten Fall wesentlich besser ist und außerdem zur schnelleren und stärkeren Schaumbildung führt. Die Reaktion des Kohlenstoffes mit dem gelösten Sauerstoff im Stahlbad, dem Eisenoxid der Schlacke sowie dem zusätzlich eingeblasenen, gasförmigen Sauerstoff über Lanzen (Düsen) erzeugt eine intensive CO/CO₂-Bildung, welche das Schäumen der Schlacke verursacht.

Da sich die Badverhältnisse und damit die Einflußgrößen der Schaumschlackenbildung während der Flachbadperiode ständig ändern, u.zw. nicht nur geringfügig, sondern auch in größeren Bereichen, ist es schwierig, über eine längere Periode eine Schaumschlacke mit stets ausreichender Schichthöhe sicherzustellen. Daher können die oben angegebenen Vorteile der Schaumschlackenfahrweise nur in geringem Ausmaß genutzt werden, d.h. wenn überhaupt, nur über ein geringes Zeitintervall der Flachbadperiode.

Gemäß der US-A - 4,447,265 wird eine Schlackenzusammensetzung angegeben, die zwar eine lange Lichtbögen umhüllende Schaumschlacke ergibt, jedoch besteht bei sich ändernden Badbedingungen einerseits die Gefahr eines Überschäumens oder einer zu geringen Höhe der Schaumschlacke.

Die Erfindung stellt sich daher die Aufgabe, ein Verfahren der eingangs beschriebenen Art sowie eine Anlage zur Durchführung des Verfahrens zu schaffen, welche die durch einen von Schaumschlacke umhüllten Lichtbogen erzielbaren Vorteile über einen längeren Zeitraum, u.zw. nach Möglichkeit über nahezu die gesamte Flachbadperiode, ermöglichen, wobei der Aufwand an Personal und Material hierfür so gering wie möglich gehalten werden soll, also eingesetzte Feststoffe und/oder Gase nur in sehr geringen Mengen erforderlich sind und Investitionen nur im geringen Umfang anfallen.

Diese Aufgabe wird bei einem Verfahren der eingangs beschriebenen Art dadurch gelöst, daß während einer Ofencharge mehrmals eine Pegelmessung der Schichthöhe einer Schlacke durchgeführt wird und durch Ein- und/oder Aufblasen von Feststoffen, Gasen oder eines Gemisches von Feststoffen und Gasen in und/oder auf die Schlacke oder die Metallschmelze eine einen von mindestens einer Elektrode gebildeten Lichtbogen einhüllende Schaurnschlacke gebildet wird, deren Schichthöhe so bemessen ist, daß sich die Schaumschlacke mindestens über den gesamten Lichtbogen erstreckt.

Zwecks Automatisierung des Verfahrens wird vorteilhaft ein durch die Pegelmessung erzeugtes Meßsignal als Regelgröße in einer Regelstrecke verarbeitet, deren Stellgröße das Ein- und/oder Aufblasen von Feststoffen, Gasen oder eines Gemisches von Feststoffen und Gasen in und/oder auf die Schlacke oder die Metallschmelze und damit die Schichthöhe der Schaumschlacke beeinflußt, wobei zweckmäßig die Pegelmessung laufend durchgeführt wird.

Gemäß einer bevorzugten Variante werden für die Pegelmessung aus dem Elektro-Lichtbogenofen stammende Schallemissionen herangezogen.

Eine weitere bevorzugte Variante ist dadurch gekennzeichnet, daß für die Pegelmessung elektrische Betriebsparameter des Elektro-Lichtbogenofens, u.zw. direkt gemessene und/oder durch Analyse ermittelte charakteristische Größen (Strom, Oberwellen), herangezogen werden.

Für bestimmte Gegebenheiten kann es von Vorteil sein, wenn für die Pegelmessung eine optische Meßmethode, insbesondere eine optische Hochtemperatur-Meßmethode oder ein Radargerät, herangezogen wird.

Von besonderem Vorteil ist es, wenn die Feststoffe und/oder Gase und/oder Gemische aus Feststoffen und Gasen in den Lichtbogen einer selbstverzehrenden Graphitelektrode über eine zentrale Längsausnehmung der Graphitelektrode eingebracht werden. Hierdurch erfolgt die Bildung der Schaumschlacke an dem Ort, an dem sie in erster Linie benötigt wird, nämlich in unmittelbarer Umgebung des Lichtbogens, so daß der Idealzustand, nämlich eine Umhüllung des Lichtbogens, in einer sehr kurzen Zeitspanne erreicht werden kann und eine Nachregelung unmittelbar wirksam wird.

Vorzugsweise werden zur Schaumschlackenbildung folgende Feststoffe einzeln oder in Kombination zu mehreren verwendet: Kohle, Koks, Holz, Eisenkarbid, direktreduziertes Eisen (DRE), heißbrikettiertes Eisen (HBE), Erz, Filterstaub, Zunder, getrockneter und zerkleinerter Schlamm, Schlackenbildner (Kalk, Kalkstein, Dolomit, Flußspat etc.).

Zweckmäßig werden zur Schaumschlackenbildung folgende Gase einzeln oder in Kombination zu mehreren verwendet: O₂, Luft, N₂, Ar, Erdgas und andere Kohlenwasserstoffe, H₂O (Dampf), CO₂.

Eine Anlage zur Durchführung des Verfahrens ist durch die Kombination folgender Merkmale gekennzeichnet:
· einen Elektro-Lichtbogenofen mit mindestens einer Elektrode,
· eine Pegelmeßeinrichtung zum Messen der Schichthöhe einer auf der Metallschmelze befindlichen Schaumschlacke,
· eine mit der Pegelmeßeinrichtung gekoppelte Regelstrecke,
· mindestens eine Zuführeinrichtung für die Zuführung von Feststoffen und/oder Gasen und/oder Feststoff-Gas-Gemischen, wobei die Regelstrecke mit der Zuführeinrichtung über ein Stellglied gekoppelt ist.

Gemäß einer konstruktiv sehr einfach zu verwirklichenden Ausführungsform ist vorteilhaft die Pegelmeßeinrichtung von einer Schallmeßeinrichtung gebildet.

Die Pegelmeßeinrichtung kann jedoch auch von einer Hochtemperatur-Meßeinrichtung, wie einer Hochtemperatur-Videokamera oder einem Hochtemperatur-Radar, gebildet sein.

Vorteilhaft ist die Pegelmeßeinrichtung in der Abgaserfassungseinrichtung des Elektro-Lichtbogenofens oder am Ofengefäß oberhalb der Schaumschlacke eingebaut.

Ist eine Pegelmeßeinrichtung nachträglich an einem bereits vorhandenen Elektro-Lichtbogenofen vorzusehen, ist vorteilhaft die Pegelmeßeinrichtung im Abstand und außerhalb des Elektro-Lichtbogenofens angeordnet, wodurch Umbauarbeiten am Elektro-Lichtbogenofen minimiert werden können.

Zur Beeinflussung der Schichthöhe der Schaumschlacke ist vorteilhaft mindestens eine Elektrode mit einer zentralen Längsausnehmung, in die eine feinkörnige Feststoffe und/oder Gase zuführende Leitung einmündet, versehen.

Mit besonderem Vorteil läßt sich die Erfindung bei einem als Gleichstrom-Lichtbogenofen ausgebildeten Elektro-Lichtbogenofen verwirklichen, denn bei einem Gleichstrom-Lichtbogenofen treten besonders lange Lichtbögen auf, für die eine Umhüllung durch Schaumschlacke gemäß bereits bekannten Verfahren nur unzureichend über einen längeren Zeitraum erzielt werden kann.

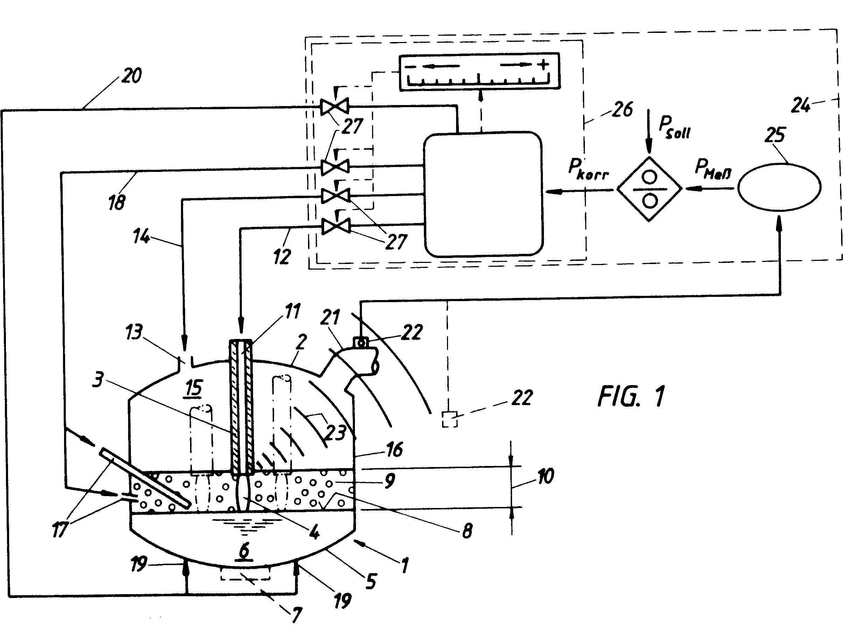

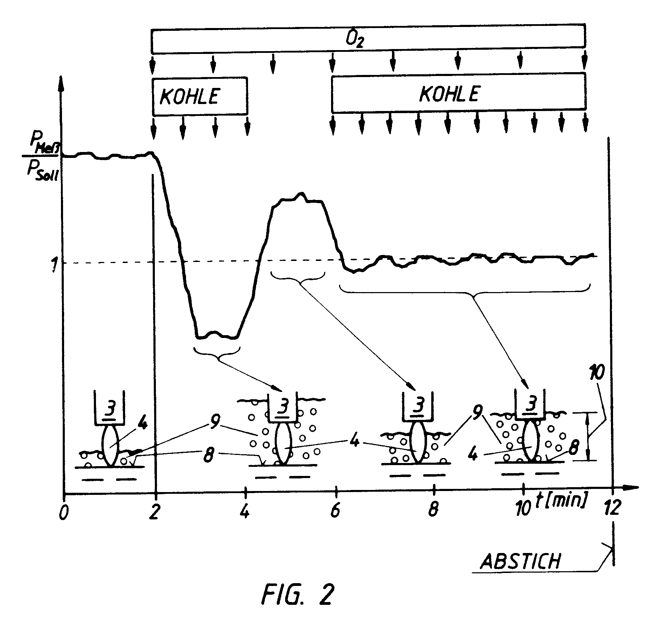

Die Erfindung ist nachfolgend anhand eines in der Zeichnung dargestellten Ausführungsbeispieles näher erläutert, wobei Fig. 1 eine erfindungsgemäß ausgestaltete Anlage teilweise geschnitten in schematischer Ansicht und Fig. 2 das erfindungsgemäße Verfahren in Diagramm-Form veranschaulichen.

In einen Elektro-Lichtbogenofen 1 ragt von oben durch dessen Deckel 2 zentral eine selbstverzehrende Graphitelektrode 3, deren Lichtbogen 4 gegen eine den Boden 5 des Elektro-Lichtbogenofens 1 bedeckende Stahlschmelze 6 brennt. Im Boden 5 ist die Gegenelektrode 7 angeordnet. Bei der dargestellten Ausführungsform handelt es sich um einen Gleichstrom-Lichtbogenofen mit nur einer Elektrode. Es könnten jedoch auch mehrere selbstverzehrende Graphitelektroden 3 - wie dies strichpunktiert veranschaulicht ist - vorgesehen sein, die mit Wechsel- oder Drehstrom betrieben werden könnten.

Auf der Stahlbadoberfläche 8 befindet sich eine Schicht aus Schaumschlacke 9 mit einer vorbestimmten Schichthöhe 10. Die selbstverzehrende Graphitelektrode 3 ist als Hohlelektrode ausgebildet. Durch ihre innere zentrale Längsausnehmung 11 können über die Leitung 12 feinkörnige Feststoffe und/oder Gase oder Gemische aus Feststoffen und Gasen zugeführt werden, die dann unmittelbar in den Elektro-Lichtbogen 4 gelangen. Der Deckel des Lichtbogenofens 1 weist noch eine Deckelöffnung 13 auf, durch die über die Zuleitung 14 zugeführte stückige Feststoffe in den Innenraum 15 des Elektro-Lichtbogenofens chargiert werden können.

Durch die Seitenwand 16 des Elektro-Lichtbogenofens 1 ragen eine oder mehrere gegenüber diesem entweder beweglich oder starr angeordnete und entweder durch Kühlwasser oder Kühlgas geschützte oder - wenn nicht geschützt - selbstverzehrende Lanzen 17 in den Innenraum 15 des Elektro-Lichtbogenofens 1. Die Lanzen 17 könnten teilweise auch durch den Ofendeckel geführt sein und außerdem durch Seiten- bzw. Deckeldüsen ersetzt werden. Die Lanzen 17 können ebenfalls zum Einbringen von feinkörnigen Feststoffen und/oder Gasen bzw. Feststoff-Gas-Gemischen dienen. Die Zuführung dieser Stoffe erfolgt über die Leitungen 18. Solche Gemische bzw. Feststoffe und/oder Gase könnten auch durch Bodendüsen 19 bzw. Bodenspülsteine (nur Gase) eingeführt werden, die über eigene Leitungen 20 versorgt werden.

Als Feststoffe und Gase, die für die Bildung einer Schaumschlacke verantwortlich sind, kommen u.a. folgende Materialien in Frage:
- Feststoffe (feinkörnig und/oder stückig):
   Kohle, Koks, Holz, Eisenkarbid, direktreduziertes Eisen (DRE), heißbrikettiertes Eisen (HBE), Erz, Filterstaub, Zunder, getrockneter und zerkleinerter Schlamm, Schlackenbildner (Kalk, Kalkstein, Dolomit, Flußspat u.a.) sowie Feststoffgemische
- Gase:
   O₂, Luft, N₂, Ar, Erdgas und andere Kohlenwasserstoffe, H₂O (Dampf), CO₂ sowie Gasgemische

Das sich im Innenraum 15 des Elektro-Lichtbogenofens 1 bildende Abgas wird über eine Abgasleitung 21 einer nicht näher dargestellten Filteranlage zugeführt. In dieser Abgasleitung eingebaut ist eine Pegelmeßeinrichtung 22, die beim dargestellten Ausführungsbeispiel als Mikrophon ausgebildet ist, das das vom Lichtbogen 4 erzeugte Geräusch (die Schallwellen sind mit 23 veranschaulicht) erfaßt und als Meßsignal an eine Regelstrecke 24 weiterleitet. Diese Regelstrecke weist eine Auswerteeinheit 25 auf, in der zunächst das gesamte Frequenzspektrum des Ofengeräusches und danach der Schallpegel P_{meß} innerhalb eines für das Schlackenschäumen charakteristischen Frequenzbereiches ermittelt wird.

Der so erhaltene Meß-Schallpegel P_{meß} wird anschließend mit einem für den Elektro-Lichtbogenofen 1 bereits bekannten Referenz-Schallpegel Pₛₒₗₗ im gleichen Frequenzbereich verglichen. Dabei entspricht der Referenz-Schallpegel Pₛₒₗₗ der angestrebten Schaumschlackenfahrweise - z.B. einer Fahrweise mit einer vollständigen Umhüllung des Lichtbogens 4 durch die Schaumschlacke 9.

Das Ergebnis des Vergleichs des Referenz-Schallpegels Pₛₒₗₗ mit dem Meß-Schallpegel P_{meß} wird als Korrekturfaktor Pₖₒᵣᵣ einem Regler 26 weitergeleitet, der seinerseits automatisch die Maßnahmen ergreift, die erforderlich sind, um die Schichthöhe 10 der Schaumschlacke 9 auf einen bestimmten Wert anzuheben oder abzusenken, u.zw. durch Regelung der die Feststoffe und/oder Gase und/oder Gemische aus den Feststoffen und Gasen dosierenden Regelorgane 27. Vorzugsweise geschieht dies automatisch; es könnte jedoch auch eine entsprechende Mitteilung an den Operator am Ofenleitstand mitgeteilt werden, worauf dieser die Regelorgane 27 in die entsprechende Stellung bringt.

Wie in Fig. 1 strichliert veranschaulicht, könnte das Mikrophon 22 auch außerhalb des Elektro-Lichtbogenofens 1 in seitlichem Abstand von diesem angeordnet sein. Anstelle des Mikrophons 22 könnte auch eine Hochtemperatur-Meßeinrichtung, die z.B. von einer Hochtemperatur-Videokamera oder einem Hochtemperatur-Radar gebildet ist, in der Abgasleitung 21 oder an einer anderen dafür geeigneten Stelle am Ofen eingebaut sein.

Gemäß einer weiteren Variante werden für die Pegelmessung die elektrischen Betriebsparameter Spannung (U) und Stromstärke (I) des Elektro-Lichtbogenofens herangezogen. Diese werden laufend erfaßt und an die Auswerteeinheit 25 weitergeleitet. In diesem Fall beinhaltet die Auswerteeinheit 25 einen speziellen DSP(Digital-Systemprozessor)Umformer, der die Effektivwerte der elektrischen Betriebsparameter und ein Stromoberwellen-Spektrum rasch ermittelt. Das Oberwellen-Spektrum oder ein auf dessen Basis erzeugtes, für die Pegelmessung charakteristisches Teilspektrum dient als Meßgröße P_{Meß}. Dieses wird anschließend mit einem vorher eingestellten Referenz-Oberwellen-Spektrum P_{Soll} zur Generierung des Korrekturfaktors P_{Korr} für den Regler 26 - ähnlich wie bei der Schallpegelmessung - verwendet.

Erfindungsgemäß kann die Messung/Regelung der Schaumschlackenhöhe auch durch eine Kombination mehrerer Varianten (z.B. Schallpegelmessung und Stromoberwellenanalyse) erfolgen.

Nachfolgend ist ein Beispiel für die Herstellung einer Stahlschmelze beschrieben, wobei die Stahlschmelze in einem 72 t-Wechselstrom-Lichtbogenofen einer Anlage nach Fig. 1 erschmolzen wurde. Der 72 t-Wechselstrom-Lichtbogenofen war mit drei Elektroden ausgerüstet, wie dies in Fig. 1 strichpunktiert angedeutet ist.

Die Herstellung der Stahlschmelze 6 erfolgte unter folgenden, während der Flachbadperiode eingehaltenen Betriebsbedingungen:
- - Badtemperatur: - zu Beginn der Flachbadperiode: 1550°C
- am Ende der Flachbadperiode (= Abstichbeginn): 1640°C
- - Stahlschmelze:: ca. 70 t
- [%C] am Anfang der Flachbadperiode: 0,21
- [%C] am Ende der Flachbadperiode: 0,09
- - Schlacke:: ca. 6 t
- (% FeOₙ) am Anfang der Flachbadperiode: 12
- (% FeOₙ) am Ende der Flachbadperiode: 17
- (% CaO)/(% SiO₂) am Anfang der Flachbadperiode: 2,1
- (% CaO)/(% SiO₂) am Ende der Flachbadperiode: 2,2
- - Dauer der Flachbadperiode:: 12 min
- - Lichtbogenlänge:: ca. 250 mm

Das als Schallaufnehmer dienende Mikrophon 22 befand sich auf einem Halter ca. 3 m vom Elektro-Lichtbogenofen 1 entfernt.

Aus Vorversuchen wurde der Frequenzbereich von 100 bis 500 Hz als charakteristisch für die Schaumschlackenbildung für den Elektro-Lichtbogenofen 1 bestimmt, so daß sowohl der Meßals auch der Referenzschallpegel (auf ca. 300 mm Schichthöhe 10 der Schaumschlacke 9 abgestimmt) für diesen Frequenzbereich ermittelt wurde.

Aus der Änderung des Verhältnisses des Meß-Schallpegels P_{meß} zum Referenz-Schallpegel Pₛₒₗₗ während der Chargendauer (Fig. 2) konnte unmittelbar auf die Schichthöhe 10 der Schaumschlacke bzw. den Umhüllungsgrad der Lichtbögen 4 (bezüglich des gewählten Referenzzustandes) und somit auf die erforderlichen Maßnahmen zur Schaumschlackenregelung geschlossen werden.

Zur Regelung der Schaumschlackenbildung wurde feinkörnige Kohle (Korngröße < 2 mm) portionsweise mit N₂-Trägergas (ca. 0,1 Nm³ N₂/kg Kohle) durch die Hohlelektrode 3 eingeblasen. Während der gesamten Flachbadperiode wurde ununterbrochen O₂ über die wassergekühlten Lanzen 17 in die Schaumschlacke 9 geblasen (ca. 21 Nm³ O₂/min); es wurden jedoch keine stückigen Feststoffe - inklusive Schlackenbildner - durch die Deckelöffnung 13 zugegeben. Durch die Bodendüsen 19 wurde N₂(Ar) und etwas Erdgas in die Metallschmelze 6 eingeleitet.

Zunächst befand sich auf der Stahlbadoberfläche 8 ungeschäumte Schlacke. Ab der zweiten Minute der Flachbadperiode - also zwei Minuten nach dem vollkommenen Einschmelzen des Einsatzes - setzte die Regelung ein, und es wurden 11 kg Kohle über die Hohlelektrode 3 zugeführt, u.zw. über etwa 2 min. Gleichzeitig mit der Zuführung der Kohle wurde bis nahezu zum Ende der Flachbadperiode, also knapp vor dem Abstichbeginn, Sauerstoff über die wassergekühlte Lanze in den Innenraum 15 des Elektro-Lichtbogenofens eingeleitet, u.zw. in einer Menge von 21 Nm³ O₂/min. Fig. 2 läßt erkennen, daß sich zunächst die Schichthöhe 10 der Schaumschlacke 9 auf einen Wert über dem Idealwert einstellte und sich danach auf den Idealwert, d.h. den angestrebten Wert von 300 mm, einpendelte. Um die Schichthöhe 10 der Schaumschlacke 9 dann konstant zu halten, wurden in der zweiten Hälfte der Flachbadperiode, die insgesamt 12 min dauerte, über eine Zeitdauer von etwa 6 min noch 12 kg Kohle über die Hohlelektrode 3 eingeleitet.

Wie aus Fig. 2 erkennbar ist, konnte, beginnend von der Regelung der Schichthöhe der Schaumschlacke ab Minute 2, über den größten Zeitraum, in dem eine Regelung stattfand, eine ausreichende Umhüllung des Lichtbogens 4 sichergestellt werden, wobei nur geringe Mengen von Feststoffen und Gasen zugeführt werden mußten.

## Patentansprüche

1. Verfahren zum Herstellen einer Metallschmelze (6), insbesondere einer Stahlschmelze (6), in einem Elektro-Lichtbogenofen (1), wobei die Badoberfläche (8) während der Flachbadperiode(n) mit einer Schaumschlacke (9) bedeckt wird, dadurch gekennzeichnet, daß während einer Ofencharge mehrmals eine Pegelmessung der Schichthöhe (10) einer Schlacke durchgeführt wird und durch Ein- und/oder Aufblasen von Feststoffen, Gasen oder eines Gemisches von Feststoffen und Gasen in und/oder auf die Schlacke oder die Metallschmelze (6) eine einen von mindestens einer Elektrode (3) gebildeten Lichtbogen (4) einhüllende Schaumschlacke (9) gebildet wird, deren Schichthöhe (10) so bemessen ist, daß sich die Schaumschlacke mindestens über den gesamten Lichtbogen (4) erstreckt

2. Verfahren nach Anspruch 1, dadurch gekennzeichnet, daß ein durch die Pegelmessung erzeugtes Meßsignal (P_{meß}) als Regelgröße in einer Regelstrecke (24) verarbeitet wird, deren Stellgröße (Pₖₒᵣᵣ) das Ein- und/oder Aufblasen von Feststoffen, Gasen oder eines Gemisches von Feststoffen und Gasen in und/oder auf die Schlacke oder die Metallschmelze (6) und damit die Schichthöhe (10) der Schaumschlacke (9) beeinflußt.

3. Verfahren nach Anspruch 1 oder 2, dadurch gekennzeichnet, daß die Pegelmessung laufend durchgeführt wird.

4. Verfahren nach einem oder mehreren der Ansprüche 1 bis 3, dadurch gekennzeichnet, daß für die Pegelmessung aus dem Elektro-Lichtbogenofen (1) stammende Schallemissionen (23) herangezogen werden.

5. Verfahren nach einem oder mehreren der Ansprüche 1 bis 4, dadurch gekennzeichnet, daß für die Pegelmessung eine optische Meßmethode herangezogen wird, insbesondere eine optische Hochtemperatur-Meßmethode.

6. Verfahren nach einem oder mehreren der Ansprüche 1 bis 5, dadurch gekennzeichnet, daß für die Pegelmessung elektrische Betriebsparameter des Elektro-Lichtbogenofens (1), u.zw. direkt gemessene und/oder durch Analyse ermittelte charakteristische Größen (Strom, Oberwellen), herangezogen werden.

7. Verfahren nach einem oder mehreren der Ansprüche 1 bis 6, dadurch gekennzeichnet, daß die Feststoffe und/oder Gase und/oder Gemische aus Feststoffen und Gasen in den Lichtbogen (4) einer selbstverzehrenden Graphitelektrode (3) über eine zentrale Längsausnehmung (11) der Graphitelektrode (3) eingebracht werden.

8. Verfahren nach einem oder mehreren der Ansprüche 1 bis 7, dadurch gekennzeichnet, daß zur Schaumschlackenbildung folgende Feststoffe einzeln oder in Kombination zu mehreren verwendet werden: Kohle, Koks, Holz, Eisenkarbid, direktreduziertes Eisen (DRE), heißbrikettiertes Eisen (HBE), Erz, Filterstaub, Zunder, getrockneter und zerkleinerter Schlamm, Schlackenbildner (Kalk, Kalkstein, Dolomit, Flußspat etc.).

9. Verfahren nach einem oder mehreren der Ansprüche 1 bis 7, dadurch gekennzeichnet, daß zur Schaumschlackenbildung folgende Gase einzeln oder in Kombination zu mehreren verwendet werden: O₂, Luft, N₂, Ar, Erdgas und andere Kohlenwasserstoffe, H₂O (Dampf), CO₂.

10. Anlage zur Durchführung des Verfahrens nach einem oder mehreren der Ansprüche 1 bis 9, gekennzeichnet durch die Kombination folgender Merkmale:
· einen Elektro-Lichtbogenofen (1) mit mindestens einer Elektrode (3),
· eine Pegelmeßeinrichtung (22) zum Messen der Schichthöhe (10) einer auf der Metallschmelze (6) befindlichen Schaumschlacke (9),
· eine mit der Pegelmeßeinrichtung (22) gekoppelte Regelstrecke (24),
· mindestens eine Zuführeinrichtung (12, 14, 18, 20) für die Zuführung von Feststoffen und/oder Gasen und/oder Feststoff-Gas-Gemischen, wobei die Regelstrecke (24) mit der Zuführeinrichtung (12, 14, 18, 20) über ein Stellglied (26) gekoppelt ist.

11. Anlage nach Anspruch 10, dadurch gekennzeichnet, daß die Pegelmeßeinrichtung (22) von einer Schallmeßeinrichtung gebildet ist.

12. Anlage nach Anspruch 10, dadurch gekennzeichnet, daß die Pegelmeßeinrichtung von einer Hochtemperatur-Meßeinrichtung, wie einer Hochtemperatur-Videokamera oder einem Hochtemperatur-Radar, gebildet ist.

13. Anlage nach einem oder mehreren der Ansprüche 10 bis 12, dadurch gekennzeichnet, daß die Pegelmeßeinrichtung (22) in der Abgaserfassungseinrichtung (21) des Elektro-Lichtbogenofens (1) oder am Ofengefäß oberhalb der Schaumschlacke eingebaut ist.

14. Anlage nach einem oder mehreren der Ansprüche 10 bis 12, dadurch gekennzeichnet, daß die Pegelmeßeinrichtung (22) im Abstand und außerhalb des Elektro-Lichtbogenofens (1) vorgesehen ist.

15. Anlage nach einem oder mehreren der Ansprüche 10 bis 14, dadurch gekennzeichnet, daß mindestens eine Elektrode (3) mit einer zentralen Längsausnehmung (11), in die eine feinkörnige Feststoffe und/oder Gase zuführende Leitung (12) einmündet, versehen ist.

16. Anlage nach einem oder mehreren der Ansprüche 10 bis 15, dadurch gekennzeichnet, daß der Elektro-Lichtbogenofen (1) als Wechselstrom- oder Gleichstrom-Lichtbogenofen ausgebildet ist.
